(19) Europäisches Patentamt
European Patent Office
Office européen des brevets

(11) **EP 2 459 403 B1**

(12) **FASCICULE DE BREVET EUROPEEN**

(45) Date de publication et mention
de la délivrance du brevet:
**25.12.2013 Bulletin 2013/52**

(21) Numéro de dépôt: **10745337.5**

(22) Date de dépôt: **25.06.2010**

(51) Int Cl.:
***B60H 1/00*** *(2006.01)*

(86) Numéro de dépôt international:
**PCT/FR2010/051318**

(87) Numéro de publication internationale:
**WO 2011/015739 (10.02.2011 Gazette 2011/06)**

(54) **PROCEDE ET DISPOSITIF DE REGULATION DE TEMPERATURE D'UN HABITACLE**

VERFAHREN UND VORRICHTUNG ZUR REGELUNG DER TEMPERATUR EINES INSASSENRAUMS

METHOD AND DEVICE FOR CONTROLLING THE TEMPERATURE OF A PASSENGER COMPARTMENT

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **28.07.2009 FR 0955278**

(43) Date de publication de la demande:
**06.06.2012 Bulletin 2012/23**

(73) Titulaire: **Peugeot Citroën Automobiles Société Anonyme**
**78140 Vélizy Villacoublay (FR)**

(72) Inventeur: **BRUNIQUEL, Guillaume**
**75013 Paris (FR)**

(56) Documents cités:
**EP-A2- 1 106 406**

**Description**

L'invention concerne un procédé et un dispositif de régulation de température d'un habitacle, plus particulièrement d'un habitacle de véhicule, notamment de véhicule automobile.

On connaît les systèmes de régulation thermique de véhicules de type systèmes bouclés. De tels systèmes reçoivent en entrée une température de consigne d'habitacle et une température mesurée d'habitacle qui sont comparées de façon à corriger un positionnement d'actionneurs pour réduire l'écart, généralement nommé erreur, entre ces deux valeurs.

La température mesurée est obtenue au moyen d'une sonde physique de température d'habitacle qui est un organe coûteux et difficile à mettre en oeuvre dans le véhicule. De plus, la représentativité du signal mesuré par rapport au niveau de confort qu'il est sensé représenter, pose souvent des problèmes de réglage de la régulation thermique.

Pour palier ces inconvénients, il a déjà été envisagé de remplacer la sonde physique de température d'habitacle par un simulateur du comportement thermique de l'habitacle qui agit comme une sonde virtuelle donnant une valeur estimée de la température de l'habitacle. La sonde virtuelle est réalisée par un calcul dynamique qui peut être décliné pour les différentes zones de l'habitacle dans lesquelles le confort thermique doit être maîtrisé.

Ce calcul est basé sur une équation différentielle classique de bilan énergétique dans l'habitacle du type de celui décrit dans le document FR2809503.

Comme tout calcul dynamique, les variables d'état doivent être initialisées au lancement du calcul.

Dans le cas d'une régulation thermique de véhicule, notamment de véhicule automobile, les variables d'état sont les températures calculées dans chaque zone par la sonde virtuelle. Il faut en effet, au lancement du système, définir un point de départ pour ces températures. L'efficacité du système automatique de régulation, en termes de précision et de confort thermique, dépend considérablement de la précision apportée à ce point de départ. Par exemple, s'il fait très chaud (la température peut atteindre 50°C) dans le véhicule un jour d'été et que le calculateur prend comme point de départ une valeur fausse (15°C par exemple), le système automatique va fonctionner comme s'il faisait 15°C dans le véhicule et va cruellement manquer d'efficacité pour refroidir l'habitacle.

Le document FR2779097 propose d'équiper le système de climatisation avec un capteur servant à l'initialisation du calcul. Cependant, le choix d'une telle solution présente l'inconvénient de perdre les effets bénéfiques de la sonde virtuelle en termes de coût et de mise en oeuvre de ce capteur.

Le document EP 1 106 406 décrit un procédé d'estimation de la température d'air dans une cabine comportant une étape d'estimation d'une température initiale, une étape de détermination d'une température cible, une de détermination de la cadence de variation de température et la détermination de la température d'air dans la cabine sur la base de la température initiale, la température cible et la cadence de variation.

Pour remédier aux problèmes posés par l'état antérieur de la technique, l'invention a pour objet un procédé de régulation de température d'un habitacle fournissant une puissance thermique régulée pour réduire un écart entre une température de consigne et une température estimée de l'habitacle, comprenant une étape pour initialiser au démarrage la température estimée à une température initiale déterminée par un intervalle de temps d'arrêt précédant le démarrage.

Avantageusement, le procédé comprend une étape activée lorsque l'intervalle de temps est court, dans laquelle la température initiale est déterminée par une fonction de l'intervalle de temps qui converge vers une température asymptote pour des valeurs croissantes de l'intervalle de temps.

Particulièrement, la température asymptote est liée à une température extérieure à l'habitacle et/ou à une température d'effet d'apport solaire de l'habitacle.

Plus particulièrement, la température d'effet d'apport solaire est fonction d'une puissance solaire reçue par l'habitacle et/ou d'une variation de la température extérieure à l'habitacle pendant ledit intervalle de temps.

Avantageusement encore, le procédé comprend une étape activée lorsque l'intervalle de temps est long, dans laquelle la température initiale est déterminée par une relation comprenant au moins une température d'organe de régulation.

Particulièrement, la relation comprend un terme correctif qui est fonction d'une puissance solaire reçue par l'habitacle.

L'invention a aussi pour objet un dispositif de régulation de température d'un habitacle comprenant un premier composant agencé pour fournir une puissance thermique régulée de façon à réduire un écart entre une température de consigne et une température estimée de l'habitacle, et un deuxième composant agencé pour exécuter le procédé selon l'invention.

L'invention a encore pour objet un véhicule comprenant le dispositif selon l'invention.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple  illustrant un mode préféré de réalisation de l'invention et dans lesquels :

- la figure 1 est une représentation schématique de dispositif de régulation conforme à l'invention ;
- la figure 2 montre une courbe de réponse en température d'habitacle ;
- la figure 3 est un organigramme de procédé conforme à l'invention.

Le procédé et le dispositif décrits à présent, permettent de réguler la température $T_{hab}$ d'un habitacle en initialisant au démarrage une température estimée $T\hat{}_{hab}$ de l'habitacle à une température initiale $T_{init}$ déterminée par un intervalle de temps d'arrêt précédent le démarrage, de façon à fournir une puissance thermique régulée $P_{reg}$ qui réduit un écart entre une température de consigne $T^*_{hab}$ et la température estimée $T\hat{}_{hab}$.

Le calcul de température initiale de l'habitacle atteint un niveau de précision situé dans un intervalle de tolérance inférieur à 5°C. En particulier, l'impact de l'ensoleillement pendant l'arrêt est estimé afin d'améliorer la précision du calcul. Les données d'entrée utilisées pour le calcul comprennent des mesures obtenues avec des capteurs classiquement utilisées par les systèmes de climatisation automatiques tels que ceux relatifs à une température extérieure, à un ensoleillement ou à une température d'évaporateur, complétées par des valeurs qui sont mémorisées de manière non effaçable pendant l'arrêt du véhicule et qui sont restituées au moment du démarrage suivant. Comme nous allons le voir dans l'exemple de mise en oeuvre décrit ci-dessous, les valeurs mémorisées comprennent essentiellement la température extérieure $T_{ext}$ et la température de l'habitacle $T\hat{}_{hab}$. Enfin, la durée d'arrêt du véhicule est également utilisée.

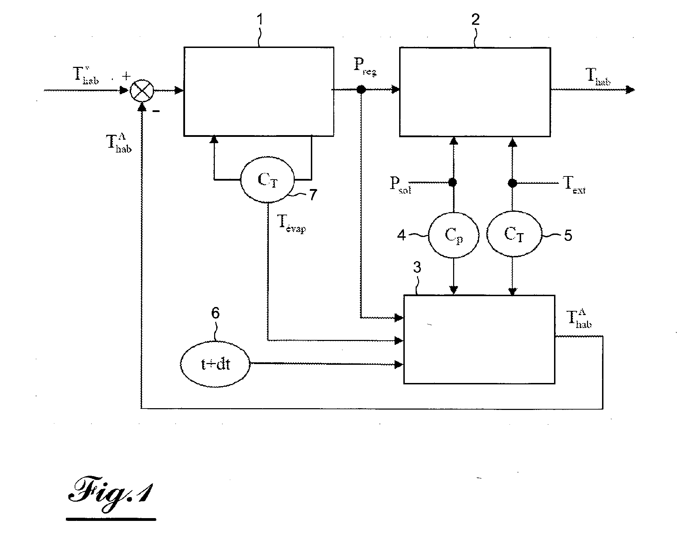

Dans le dispositif représenté en figure 1, un composant 1 génère de manière classique une puissance thermique régulée $P_{reg}$ qui est transmise dans l'habitacle. La température effective $T_{hab}$ de l'habitacle ou d'une zone intérieure à l'habitacle, résulte d'une fonction de transfert 2 de l'habitacle recevant en entrée la puissance thermique régulée $P_{reg}$ et soumise à divers facteurs environnementaux comprenant notamment une puissance $P_{sol}$ apportée par le soleil sur l'habitacle et des échanges par conductions et convection thermique avec l'extérieur du véhicule à la température $T_{ext}$.

De manière connue en soi, le composant 1 pilote différents actionneurs (non représentés) tels que des organes chauffants, des organes réfrigérants et des volets de contrôle de débit, de façon à fournir la puissance thermique régulée $P_{reg}$ pour réduire un écart entre une température de consigne $T^*_{hab}$ et une valeur représentative de la température effective $T_{hab}$ de l'habitacle. Un écart positif indique une température effective supérieure à la consigne et on exprime alors parfois la puissance thermique régulée $P_{reg}$ en frigories. Un écart négatif indique une température effective inférieure à la consigne et on exprime alors parfois la puissance thermique régulée $P_{reg}$ en thermies. Le composant 1 possède ses propres capteurs pour_agir en boucle fermée interne sur ses actionneurs. Par exemple, un capteur 7 de température permet au composant 1 de contrôler une température d'évaporateur.

Dans un dispositif classique en boucle fermée de régulation de température de l'habitacle, la valeur représentative de la température effective $T_{hab}$ de l'habitacle est obtenue au moyen d'un capteur mesurant la température effective $T_{hab}$ de l'habitacle.

Dans le dispositif conforme à l'invention, la valeur représentative de la température effective $T_{hab}$ de l'habitacle est obtenue au moyen d'un composant 3 qui calcule une température estimée $T\hat{}_{hab}$ de l'habitacle. Pour modéliser la fonction de transfert 2, le composant 3 reçoit en entrée, une valeur numérisée de la puissance thermique régulée $P_{reg}$ fournie par le composant 1 et différentes mesures de grandeurs physiques qui influent sur la fonction de transfert de l'habitacle, notamment une mesure de la puissance solaire $P_{sol}$ délivrée par un capteur de puissance 4 et une mesure de la température extérieure $T_{ext}$ délivrée par un capteur de température 5.

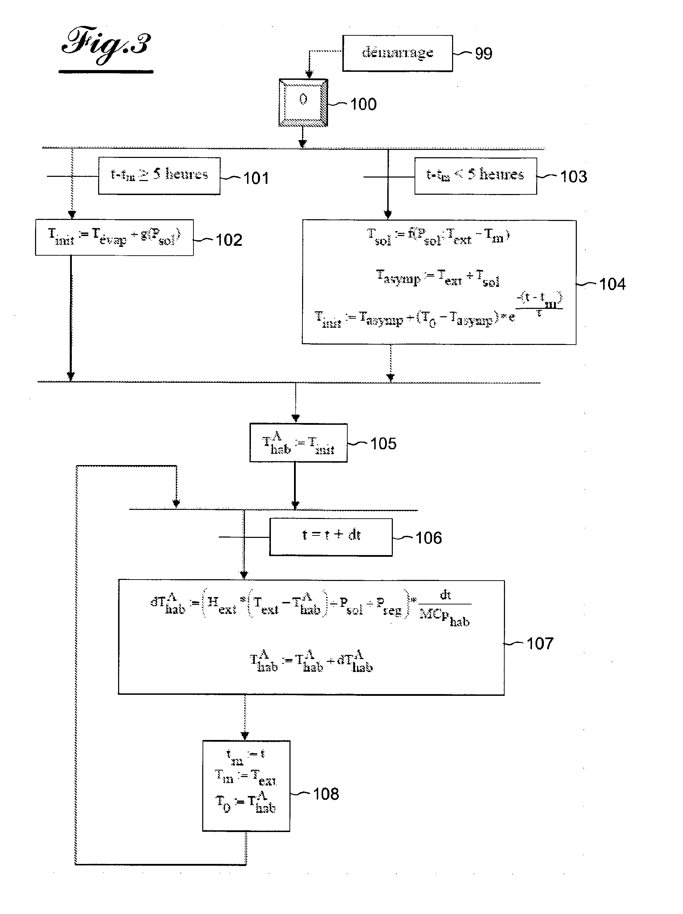

Le dispositif comprenant les composants 1 et 3, n'est généralement pas alimenté lorsque le véhicule est arrêté contact coupé et démarre lors de la mise en route du véhicule. Seule une horloge 6 reste constamment alimentée indépendamment des arrêts et des mises en route du véhicule. Le composant 3 est connecté à l'horloge 6 pour exécuter les étapes de procédé expliquées à présent en référence à la figure 3.

Lorsque le dispositif comprenant les composants 1 et 3, fonctionne, chaque durée élémentaire dt qui augmente le temps t mesuré par l'horloge 6, valide une transition 106. Chaque validation de la transition 106 active et réactive une étape 107.

Dans l'étape 107, le composant 3 ajoute un incrément $dT\hat{}_{hab}$ de température à la valeur précédemment estimée de température $T\hat{}_{hab}$. L'incrément de température est calculé en temps réel de façon à simuler le cumul des différentes énergies thermiques échangées pendant la durée élémentaire dt avec l'habitacle. Dans l'équation de l'étape 107, Preg est définie comme la puissance thermique injectée dans l'habitacle, en tenant compte de la puissance thermique qui sort de l'habitacle. Dans la détermination de Preg, la puissance thermique qui sort de l'habitacle est soustraite à l'apport du débit d'air soufflé dans l'habitacle, par exemple en soustrayant à ce débit une valeur Pfuite et qui est égale au (débit d'air soufflé dans l'habitacle) * (Cp de l'air) * (Thab estimée).

La température estimée est constamment calculée à partir d'une valeur précédente de température $T\hat{}_{hab}$. Pour une première activation de l'étape 107 qui fait suite au démarrage du dispositif, une étape 105 initialise la température estimée $T\hat{}_{hab}$ à une température initiale $T_{init}$.

Le démarrage du dispositif valide un amorçage 99 qui active une étape 100 de mise en exécution du procédé.

A partir de l'étape 100, le calcul d'initialisation est décomposé en deux calculs distincts, qui dépendent de la durée d'arrêt du véhicule.

Le premier calcul concerne les arrêts de courte durée, en général les arrêts inférieurs à cinq heures. Durant cette période d'arrêt, le véhicule est en veille et aucun capteur n'est exploité. L'enjeu est donc de simuler le comportement thermique de l'habitacle du véhicule afin de représenter la variation de température au cours de l'arrêt. La variation de température pendant l'arrêt du véhicule est liée essentiellement à deux types d'échanges : la convection avec l'extérieur et l'ensoleillement.

$$\text{Equation (1)} \quad MCp_{hab}\frac{dT_{hab}}{dt} = H_{ext} * (T_{ext} - T_{hab}(t)) + Psol$$

$T_{hab}(t)$ étant la température de l'habitacle en fonction du temps t, pendant l'arrêt, exprimée en °C.
$T_{ext}$ étant la température extérieur, exprimée en °C.
$H_{ext}$ étant le coefficient d'échange global avec l'extérieur, exprimé en W/°C.
Psol étant la puissance solaire moyenne apportée pendant l'arrêt exprimée en W.
$MCp_{hab}$ étant la capacité calorifique de l'habitacle, exprimée en J/°C.

En considérant que durant l'arrêt, la puissance solaire Psol et la température extérieure sont de valeurs constantes égales à leurs moyennes respectives, la solution de l'équation différentielle du 1er ordre ci-dessus énoncée, est simple :

$$\text{Equation (2)} \quad T_{hab}(t) = T_{asymp} + (T_0 - T_{asymp})e^{-\frac{t}{\tau}}$$

$T_{asymp}$ étant la température atteinte asymptotiquement dans l'habitacle.
$T_0$ étant la température initiale dans l'habitacle, au début de l'arrêt à l'instant t=0.
$\tau$ étant la constante de temps du système thermique constitué par l'habitacle.

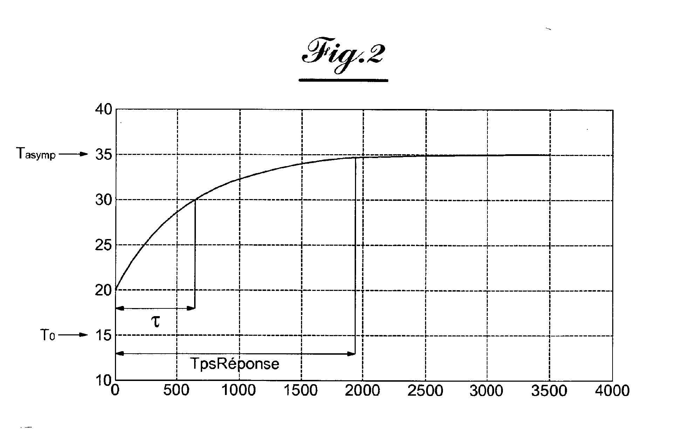

Un modèle de comportement est préféré à un modèle de connaissance pour représenter ce phénomène. En effet, il suffit de mesurer la température dans l'habitacle pendant une phase de chambrage thermique pour évaluer sa constante de temps $\tau$. La constante de temps donne le profil dynamique de la température de l'habitacle au court du temps, avec comme point de départ la température initiale $T_0$ de l'habitacle au début de l'arrêt, et comme point final la température finale dans l'habitacle, dite température asymptote $T_{asymp}$.
La courbe associée à l'équation (2) est illustrée dans l'exemple de la figure 2.
Sur cet exemple, la température initiale $T_0$ dans l'habitacle est de 20°C, la température asymptote $T_{asymp}$ est de 35°C et la constante de temps $\tau$ du système thermique constitué par l'habitacle est de 10 minutes (600s).
L'invention repose notamment sur le mode de calcul de la température $T_{asymp}$.
Considérant dans l'équation (1) que la température de l'habitacle a atteint la température asymptote $T_{asymp}$,

on observe que $\frac{dT_{hab}}{dt} = 0$ et $T_{hab} = T_{asymp}$ dont il résulte la formule suivante :

$$\text{Equation (3)} \quad T_{asymp} = T_{ext} + \frac{Psol}{H_{ext}}$$

On note que s'il n'y a pas de soleil pendant la phase d'arrêt du véhicule, la température finale asymptote est égale à la température extérieure $T_{ext}$. On note aussi que le rapport $\frac{Psol}{H_{ext}}$ est homogène à une température et on le nomme $T_{sol}$ exprimé en °C pour désigner un apport du soleil en température. Ce terme a un impact considérable sur le calcul de la température asymptote $T_{asymp}$. En effet, l'apport solaire $T_{sol}$ peut atteindre 30°C.

Une difficulté notable réside dans l'estimation robuste de cet apport solaire pendant la phase d'arrêt, alors qu'aucune acquisition des capteurs n'est possible car le véhicule est en veille.
Une solution selon l'invention est d'utiliser la mesure de l'ensoleillement au démarrage du véhicule et d'utiliser l'élévation de la mesure de température extérieure durant la phase d'arrêt entre le début de l'arrêt et le redémarrage du véhicule.

On utilise dans ce cas le capteur de température extérieure comme un espion de l'historique de l'ensoleillement pendant l'arrêt du véhicule. De fait, lorsqu'il y a beaucoup de soleil, la mesure de la température extérieure augmente significativement alors qu'elle augmente peu, voire diminue lorsqu'il n'y a pas de soleil. On corrige en conséquence la mesure d'ensoleillement faite au moment du démarrage, par exemple par un capteur d'ensoleillement de type classique, qui n'est pas représentative de l'ensoleillement moyen pendant la phase d'arrêt du véhicule qui précède, en ajoutant un terme qui dépend de l'écart de température extérieure.

Par exemple, s'il faisait 25°C à l'extérieur du véhicule au moment de l'arrêt et qu'on mesure 30°C au démarrage suivant, on considère qu'il y a eu du soleil pendant l'arrêt et on ajoute 20 à 30% à la mesure réelle de l'ensoleillement à l'instant $t_d$ du démarrage.

$$T_{sol} = f(P_{sol}; \text{DeltaText})$$

Où Psol est la puissance solaire au démarrage et DeltaText est un écart de température pendant l'arrêt entre une température extérieure $T_m$ au moment de l'arrêt et la température extérieure $T_{ext}$ au moment du redémarrage. La fonction est caractérisée par une cartographie à deux dimensions, évaluée expérimentalement. La température $T_m$ est par exemple la dernière température $T_{ext}$ mémorisée juste avant l'arrêt dans une étape 108 constamment activée à la suite de l'étape 107. Dans l'étape 108, on mémorise T^hab dans la variable T0 qui est réinjectée dans l'étape 105 comme valeur de T^hab et dans l'étape 107.

On arrive ainsi à calculer la température asymptote avec une précision de +/- 5°C.

On connaît à présent toutes les variables nécessaires au calcul de Tinit_tpscourt au démarrage du véhicule, pour les arrêts de courte durée, notamment inférieurs à cinq heures.

$$\text{Equation (4)} \quad T_{init\_tpscourt} = T_{asymp} + (T_0 - T_{asymp}) * e^{-\frac{TpsImmo}{\tau}}$$

$T_0$ étant la température estimée de l'habitacle telle que mémorisée juste avant l'arrêt, par exemple dans l'étape 108, et restituée au moment du démarrage.

$T_{asymp}$ étant la température finale calculée à partir de l'ensoleillement mesuré au démarrage, de la température extérieure $T_{ext}$ et du réchauffement détecté par une élévation de la température extérieure $T_{ext}$.

TpsImmo étant la durée d'immobilisation du véhicule à l'arrêt entre la valeur du temps t au moment du redémarrage et une valeur $t_m$ du temps mémorisée lors d'une dernière exécution de l'étape 108 au moment de l'arrêt précédent.

$\tau$ étant la constante de temps du système thermique constitué par l'habitacle, estimée expérimentalement.

Ainsi, le premier calcul de la température initiale $T_{init}$ donnée par Tinit_tpscourt, est effectué dans une étape 104 activée par une transition 103 qui vérifie une valeur suffisamment faible de la durée $t-t_m$.

Le second calcul concerne les arrêts de longue durée, donc les arrêts supérieurs à cinq heures. Il est réalisé dans une étape 102 qui est activée par une transition 101.

Dans ces conditions, on considère que la précision du calcul précédent de $T_{asymp}$ commence à baisser.

En effet, « l'espion ensoleillement » qu'est le Delta de Text pendant l'arrêt perd de son efficacité car plus la durée d'arrêt est longue, plus la température extérieure $T_{ext}$ varie naturellement de façon considérable et indépendamment de l'ensoleillement.

Cependant, dans ces conditions, on va constater que la thermique dans l'habitacle est convergée et que l'on peut faire confiance aux capteurs présents dans le système de climatisation. En particulier le capteur de température évaporateur situé dans le groupe de climatisation va servir de référence dans l'estimation de la température d'initialisation sur les temps d'arrêts longs (Tinit_tpslong).

Un terme correctif basé sur la mesure de l'ensoleillement au démarrage peut être introduit afin d'adapter le calcul d'initialisation pour les temps d'arrêt longs. Dans un mode de réalisation, la puissance solaire reçue durant l'arrêt du véhicule est mesurée par un capteur apte à stocker de l'énergie solaire et/ou à mémoriser l'énergie reçue, par exemple en intégrant des cellules photovoltaïques. Les données de ce capteur sont utilisées pour le terme correctif et/ou comme paramètre de l'apport du soleil en température $T_{sol}$.

On ne peut pas utiliser cette méthode de calcul sur les temps d'arrêt courts car la température vue par le capteur évaporateur reste décalée par rapport à la température dans l'habitacle.

La bascule entre les deux calculs peut être réalisée de façon linéaire en fonction de la durée de l'arrêt (TpsImmo).

On notera l'intérêt que représente l'estimation de l'ensoleillement conforme à l'invention pendant la phase d'arrêt du véhicule, basée sur la variation de température extérieure mesurée par le capteur 5. Sur des temps courts, on considère que la température extérieure $T_{ext}$ varie peu et que si la mesure du capteur augmente, c'est qu'il y eu du soleil pendant l'arrêt.

On notera aussi l'intérêt permis par l'invention de se passer de l'achat d'un capteur spécifique pour initialiser le calcul de température de l'habitacle. Capteur qui aurait nécessité d'être installé dans une zone de l'habitacle où le style l'aurait permis et où sa représentativité aurait été difficile à assurer. Il n'est plus nécessaire d'adapter l'installation d'un capteur intérieur spécifiquement à chaque type de véhicule.

En termes d'industrialisation, la composante logicielle de l'invention permet de standardiser la solution technique sur tous les véhicules. Cette standardisation permet d'économiser du temps de développement et de mise au point.

**Revendications**

**1.** Procédé de régulation de température ($T_{hab}$) d'un habitacle fournissant une puissance thermique régulée ($P_{reg}$) pour réduire un écart entre une température de consigne ($T^*_{hab}$) et une température estimée ($T^\wedge_{hab}$) de l'habitacle, comprenant une étape (105) pour initialiser au démarrage la température estimée ($T^\wedge_{hab}$) à une température initiale ($T_{init}$) déterminée par un intervalle de temps d'arrêt précédant le démarrage, et comprenant en outre une étape (104) activée lorsque ledit intervalle de temps est court, dans laquelle la température initiale ($T_{init}$) est déterminée par une fonction de l'intervalle de temps qui converge vers une température asymptote ($T_{asymp}$) lorsque l'intervalle de temps augmente, la température asymptote étant liée à une température d'effet d'apport solaire ($T_{sol}$) de l'habitacle, **caractérisé en ce que** la température d'effet d'apport solaire ($T_{sol}$) est fonction d'une variation de la température extérieure ($T_{ext}$) à l'habitacle pendant ledit intervalle de temps.

**2.** Procédé selon la revendication 1, dans lequel la température asymptote est liée à une température extérieure ($T_{ext}$) à l'habitacle.

**3.** Procédé selon l'une des revendications 1 ou 2, dans lequel la température d'effet d'apport solaire ($T_{sol}$) est fonction d'une puissance solaire ($P_{sol}$) reçue par l'habitacle.

**4.** Procédé selon l'une des revendications précédentes, comprenant une étape (102) activée lorsque ledit intervalle de temps est long, dans laquelle la température initiale ($T_{init}$) est déterminée par une relation comprenant au moins une température d'organe de régulation ($T_{évap}$).

**5.** Procédé selon la revendication 4, dans lequel ladite relation comprend un terme correctif qui est fonction d'une puissance solaire ($P_{sol}$) reçue par l'habitacle.

**6.** Dispositif de régulation de température ($T_{hab}$) d'un habitacle comprenant un premier composant (1) agencé pour fournir une puissance thermique régulée ($P_{reg}$) de façon à réduire un écart entre une température de consigne ($T^*_{hab}$) et une température estimée ($T^\wedge_{hab}$) de l'habitacle, et un deuxième composant (2) agencé pour exécuter le procédé selon l'une des revendications 1 à 5.

**7.** Véhicule comprenant le dispositif selon la revendication 6.

**Patentansprüche**

**1.** Verfahren zur Regulierung der Temperatur ($T_{hab}$) einer Fahrgastzelle, das eine regulierte Wärmeleistung ($P_{reg}$) beisteuert, um einen Unterschied zwischen einer Solltemperatur ($T^*_{hab}$) und einer geschätzten Temperatur ($T^\wedge_{hab}$) der Fahrgastzelle zu verringern, umfassend einen Schritt (105) zum Initialisieren der geschätzten Temperatur ($T^\wedge_{hab}$) beim Start auf eine ursprüngliche Temperatur ($T_{init}$), die durch ein Haltezeitintervall bestimmt wird, die dem Start vorausgeht, und umfassend darüber hinaus einen Schritt (104), der aktiviert wird, wenn das besagte Zeitintervall kurz ist, bei dem die ursprüngliche Temperatur ($T_{init}$) durch eine Funktion des Zeitintervalls bestimmt wird, die in Richtung einer asymptotischen Temperatur ($T_{asymp}$) konvergiert, wenn sich das Zeitintervall vergrößert, und die asymptotische Temperatur an eine Effekttemperatur durch Sonneneinstrahlung ($T_{sol}$) der Fahrgastzelle gebunden ist, **dadurch gekennzeichnet, dass** die Effekttemperatur durch Sonneneinstrahlung ($T_{sol}$) von einer Variation der Temperatur außerhalb ($T_{ext}$) der Fahrgastzelle während des besagten Zeitintervalls abhängt.

**2.** Verfahren nach Anspruch 1, bei dem die asymptotische Temperatur an eine Temperatur außerhalb ($T_{ext}$) der Fahr-

gastzelle gebunden ist.

**3.** Verfahren nach einem der Ansprüche 1 oder 2, bei dem die Effekttemperatur durch Sonneneinstrahlung ($T_{sol}$) von einer Sonnenleistung ($P_{sol}$) abhängt, die von der Fahrgastzelle aufgenommen wird.

**4.** Verfahren nach einem der vorherigen Ansprüche, umfassend einen Schritt (102), der aktiviert wird, wenn das besagte Zeitintervall lang ist, in dem die ursprüngliche Temperatur ($T_{init}$) durch eine Relation bestimmt wird, die zumindest eine Temperatur des Regulierungsorgans ($T_{evap}$) umfasst.

**5.** Verfahren nach Anspruch 4, bei dem die besagte Relation eine Korrekturgröße umfasst, die von einer Sonnenleistung ($P_{sol}$) abhängt, die von der Fahrgastzelle aufgenommen wird.

**6.** Vorrichtung zur Regulierung der Temperatur ($T_{hab}$) einer Fahrgastzelle, umfassend ein erstes Bauteil (1), das angeordnet ist, um eine regulierte Wärmeleistung ($P_{reg}$) beizusteuern, um einen Unterschied zwischen einer Solltemperatur ($T^*_{hab}$) und einer geschätzten Temperatur ($T^\wedge_{hab}$) der Fahrgastzelle zu verringern, und ein zweites Bauteil (2), das angeordnet ist, um das Verfahren nach einem der Ansprüche 1 bis 5 auszuführen.

**7.** Fahrzeug umfassend die Vorrichtung nach Anspruch 6.

**Claims**

**1.** Method for controlling the temperature ($T_{hab}$) of a passenger compartment providing a controlled heat power ($P_{reg}$) in order to reduce a difference between a set value temperature ($T^*_{hab}$) and an estimated temperature ($T^\wedge_{hab}$) of the passenger compartment, comprising a step (105) of initialising at start-up the estimated temperature ($T^\wedge_{hab}$) to an initial temperature ($T_{init}$) determined by a stop time interval preceding the start-up, and further comprising a step (104) activated when said time interval is short, wherein the initial temperature ($T_{init}$) is determined by a function of the time interval that converges towards an asymptotic temperature ($T_{asymp}$) when the time interval increases, with the asymptotic temperature being linked to a solar gain temperature effect ($T_{sol}$) of the passenger compartment, **characterised in that** la solar gain temperature effect ($T_{sol}$) is a function of a variation in the temperature exterior ($T_{ext}$) to the passenger compartment during said time interval.

**2.** Method according to claim 1, wherein the asymptotic temperature is linked to a temperature exterior ($T_{ext}$) to the passenger compartment.

**3.** Method according to one of claims 1 or 2, wherein the solar gain temperature effect ($T_{sol}$) is a function of a solar power ($P_{sol}$) received by the passenger compartment.

**4.** Method according to one of the preceding claims, comprising a step (102) activated when said time interval is long, wherein the initial temperature ($T_{init}$) is determined by a relation comprising at least one controlling member temperature ($T_{évap}$).

**5.** Method according to claim 4, wherein said relation comprises a corrective term which is a function of a solar power ($P_{sol}$) received by the passenger compartment.

**6.** Device for controlling the temperature ($T_{hab}$) of a passenger compartment comprising a first component (1) arranged in order to provide a controlled heat power ($P_{reg}$) so as to reduce a difference between a set value temperature ($T^*_{hab}$) and an estimated temperature ($T^\wedge_{hab}$) of the passenger compartment, and a second component (2) arranged in order to execute the method according to one of claims 1 to 5.

**7.** Vehicle comprising the device according to claim 6.

*Fig.1*

_Fig.2_

*Fig.3*

démarrage — 99

0 — 100

t-t$_m$ ≥ 5 heures — 101

t-t$_m$ < 5 heures — 103

$T_{init} := T_{évap} + g(P_{sol})$ — 102

$T_{sol} := f(P_{sol}; T_{ext} - T_m)$

$T_{asymp} := T_{ext} + T_{sol}$

$T_{init} := T_{asymp} + (T_0 - T_{asymp}) * e^{\frac{-(t - t_m)}{\tau}}$ — 104

$T_{hab}^A := T_{init}$ — 105

$t = t + dt$ — 106

$dT_{hab}^A := \left( H_{ext} * \left( T_{ext} - T_{hab}^A \right) + P_{sol} + P_{reg} \right) * \frac{dt}{MCp_{hab}}$

$T_{hab}^A := T_{hab}^A + dT_{hab}^A$ — 107

$t_m := t$

$T_m := T_{ext}$

$T_0 := T_{hab}^A$ — 108

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2809503
- FR 2779097
- EP 1106406 A